Europäisches Patentamt

European Patent Office

Office européen des brevets

(11) Publication number: **0 317 673 B1**

(12) **EUROPEAN PATENT SPECIFICATION**

(45) Date of publication of patent specification: **05.08.92**  (51) Int. Cl.⁵: **A63B 55/08**, B62B 1/12

(21) Application number: **87310308.9**

(22) Date of filing: **23.11.87**

(54) **Golf cart or trolley.**

(43) Date of publication of application:
**31.05.89 Bulletin  89/22**

(45) Publication of the grant of the patent:
**05.08.92 Bulletin  92/32**

(84) Designated Contracting States:
**AT BE CH DE ES FR GB GR IT LI LU NL SE**

(56) References cited:
**DE-U- 8 336 252       FR-A- 2 575 430**
**GB-A- 2 171 653       US-A- 2 574 232**
**US-A- 2 775 464       US-A- 3 831 958**

(73) Proprietor: **SUN SON ALUMINUM FACTORY
CO. LTD.
No. 281, Cherng Der Road
Taipei(TW)**

(72) Inventor: **Lee, Ching Chuan
No. 281, Cherng Der Road
Taipei Taiwan(CN)**

(74) Representative: **Thomson, Paul Anthony et al
Potts, Kerr & Co. 15, Hamilton Square
Birkenhead Merseyside L41 6BR(GB)**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid (Art. 99(1) European patent convention).

Rank Xerox (UK) Business Services

## Description

The present invention relates to a golf cart or trolley and more particularly to a golf cart or trolley which has improvements in the grip supporting rod and its means for attachment to the golf bag supporting means, as well as improvements in the hand grip, the upper fixing or holding member for the golf bag, the collapsible cart or trolley frame and the means for fastening the wheels to the remainder of the cart or trolley.

Conventional golf carts or trolleys have the following disadvantages:

1. The known grip supporting rod for a golf cart or trolley is non-adjustable so that the angle of inclination of the grip supporting rod is fixed. However, since each golfer has his own height and arm length, the fixed inclination of the grip supporting rod is by no means practical for all users.

2. The control components of the known collapsible frame for a golf cart or trolley are usually mounted on an external portion of the golf cart or trolley. However, such an arrangement may easily hurt the golfer when he intends to collapse the cart or trolley. In addition, the slidable elements, such as the sleeve and the like, are only loosely mounted on the supporting rod so as to be able to slide therealong. However, such an arrangement makes the strength of the structure insufficient so that the elements thereof can easily be damaged.

3. The connection between the wheels and the supporting frame of a known golf cart or trolley is complicated so that the assembly and disassembly can be difficult. Furthermore, the space required for storing the collapsed golf cart or trolley is relatively large.

It is an object of the invention to provide an improved golf cart or trolley wherein the angle of inclination of the grip supporting rod may be changed.

It is known from DE-U-8336252 to provide a golf trolley or the like, having a displaceably adapted supporting strut for receiving a bag, and a steering strut for guiding the golf trolley, said steering strut being pivotably mounted on the supporting strut and being adjustably lockable via an adjusting means, wherein the adjusting means is a lock which is non-detachably displaceable in the longitudinal direction of the strut on a first strut (steering strut) of the struts, and a pivotable slip-on member is pivotably mounted on the lock and is displaceable via the associated front end of the second strut (supporting strut), and the spacing between the pivotal axis of the slip-on member and the first strut is adjustable.

The object of the the present invention is achieved by providing an improved golf cart or trolley wherein the grip supporting rod is movably joined with its fixing seat for attachment to the golf bag supporting means and one end of the fixing seat is mounted on a central supporting rod which the other end thereof is formed with a pair of parallel extensions symmetrical to each other, and each extension has a plurality of recesses at its upper edge, such that the handle supporting rod can engage with or disengage from one of said recesses with the aid of a movable member to alter the inclination of the handle supporting rod.

According to the present invention there is provided a golf cart or trolley comprising a grip, a grip supporting rod, a fixing seat for mounting the grip supporting rod on a central supporting rod, a fixing member for holding a golf bag, a collapsible frame, a pair of wheels, wheel supporting rods and a structure for joining the wheels and wheel supporting rods together, characterised in that:

said fixing seat is provided at one end with a sleeve by which the fixing seat can be mounted on said central supporting rod, the other end of said fixing seat being formed as a pair of symmetrical extensions, each extension being formed at its upper edge with a plurality of recesses, each recess being open upwardly, and in that

said grip supporting rod has a latch pin radially passing therethrough, both ends of said latch pin projecting from said grip supporting rod, said grip supporting rod being formed with a pair of longitudinal slots each corresponding to one of said two ends of said latch pin so that said latch pin can move along said two slots, said grip supporting rod further being provided with a movable element, said movable element being connected to said latch pin by a link such that the latch pin can be moved along said two slots by operating the movable element, said latch pin being connected to a spring which forces the latch pin downwardly towards said fixing seat;

whereby said grip supporting rod can engage with one of said recesses by adjusting said movable element to facilitate the adjustment of the inclination of said grip supporting rod.

The extensions of said fixing seat are preferably sector-shaped. Moreover, the elongate slots preferably extend axially along the grip supporting rod.

In an embodiment of the present invention, the fixing member for holding a golf bag on said golf cart or trolley has a V-shaped body, the intersection of both wings of said V-shaped body being formed with an aperture which has at its side wall a pin hole, the front edge of the open end of said V-shaped body being arcuate, each wing of said V-shaped body having rear side extensions of upper and lower plates between which a chamber is formed, wherein the upper and lower plates having arcuate edges symmetrical to each other, the upper edge of each said wing further being provided with an arcuate recess through which a golf ball can be located in said chamber.

In a further embodiment of the present invention the grip for the golf cart or trolley has a U-shaped body which extends downwardly to form an insert portion by which said grip can be mounted on the grip supporting rod, said grip body having at its upper portion a horizontal handle portion which is formed at its lower side with a corrugated portion, one end of said handle portion extending outwardly to form a semi-spherical seat in which a chamber is formed, said semi-spherical seat having a plurality of recesses, said semi-spherical seat being formed at its upper end with a plurality of fingers so as to elastically hold a golf ball within said semi-spherical seat.

Also in an embodiment of the invention the collapsible frame for said golf cart or trolley comprises a short tube, a lower central supporting rod, a set of connection pieces, and a connection member or seat, said lower central supporting rod having a sliding slot, a set of links being disposed in said lower central supporting rod in such a manner that one end of each link is connected with said short tube and the other end thereof is connected with a slidable element, said slidable element having a positioning block which is arranged to freely and stably slide along said sliding slot of said lower central supporting rod, said positioning block being joined with a joining piece which has a pair of extensions, one end of each of said connection pieces being connected to each of said extensions of said joining piece and the other end of each of said connection pieces being connected to a wheel supporting rod, said connection seat being connected to both the lower central supporting rod and said wheel supporting rods, whereby said wheel supporting rods can be extended when said short tube is forced upwardly and said wheel supporting rods can be collapsed to align with said lower central supporting rod when said short tube is forced downwardly.

The invention also includes an embodiment wherein the combined structure of wheels and supporting members for the golf cart or trolley comprises a metal plate assembly, said pair of wheels, a movable element and a spring, a metal plate assembly being U-shaped and having a pair of vertical plates, each vertical plate being formed with an inclined extension having an axial hole, an axle being secured to a wheel, said axle having a latch slot, the horizontal bottom plate of said metal plate assembly being vertically joined with the wheel supporting rods and said vertical extension of said metal plate assembly being joined with said axle of said wheel, a latch member of said movable element being forced to engage with said latch slot of said axle by said spring, so as to secure said wheel to said metal plate assembly, said movable element being able to overcome the extension force provided by said spring such that said latch member can disengage from said latch slot to separate said wheel from said metal plate assembly.

The present invention will be further illustrated by way of example with reference to the accompanying drawings, in which:

Fig. 1 is a perspective view of a golf cart in accordance with a preferred embodiment of the present invention;

Fig. 2 is a perspective view of a grip in accordance with the present invention;

Fig. 3 is a schematic view showing the connection between a grip supporting rod and its fixing seat;

Fig. 4 is a cross-sectional view illustrating a movable element construction being disposed in the grip supporting rod;

Fig. 5 is a perspective view of an upper fixing member for holding a golf bag in accordance with the present invention;

Fig. 6 is a schematic view showing a collapsible frame in accordance with the present invention;

Fig. 7 is a cross-sectional view illustrating a slidable link mechanism being disposed in a lower central supporting rod;

Fig. 8 is a side view of the collapsible frame in accordance with the present invention;

Fig. 9 is a perspective view showing a wheel being connected to the support rods of a collapsible frame by means of a metal plate assembly in accordance with the present invention;

Fig. 10 is a fragmentary view showing the wheel, the supporting rods and the metal plate assembly as shown in Fig. 9;

Fig. 11 is a longitudinal sectional view showing the connection between an axle and the metal plate assembly in accordance with the present invention;

Fig. 12 is a cross-sectional view showing the connection between the axle and the metal plate assembly in accordance with the present invention; and

Fig. 13 is a schematic view showing an extruded aluminum tube which can serve as a supporting rod in accordance with the present invention.

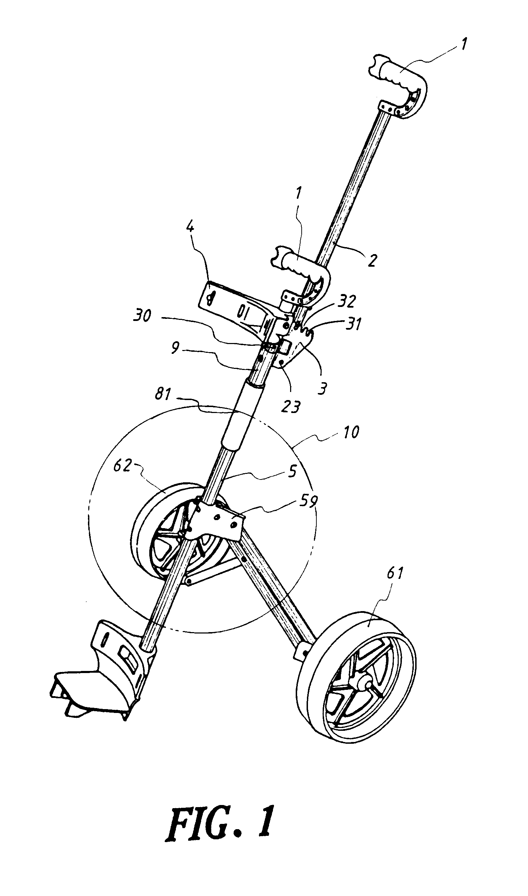

Referring to Fig. 1, a golf cart or trolley in accordance with the present invention comprises a pair of grips 1, 1', a grip supporting rod 2, means for mounting the rod 2 on rod 9, hereinafter referred to as a fixing seat 3 for the grip supporting rod, an upper fixing member 4 for holding a golf bag (not shown), a collapsible frame 10, a pair of wheels 61,62, and a metal plate assembly 63.

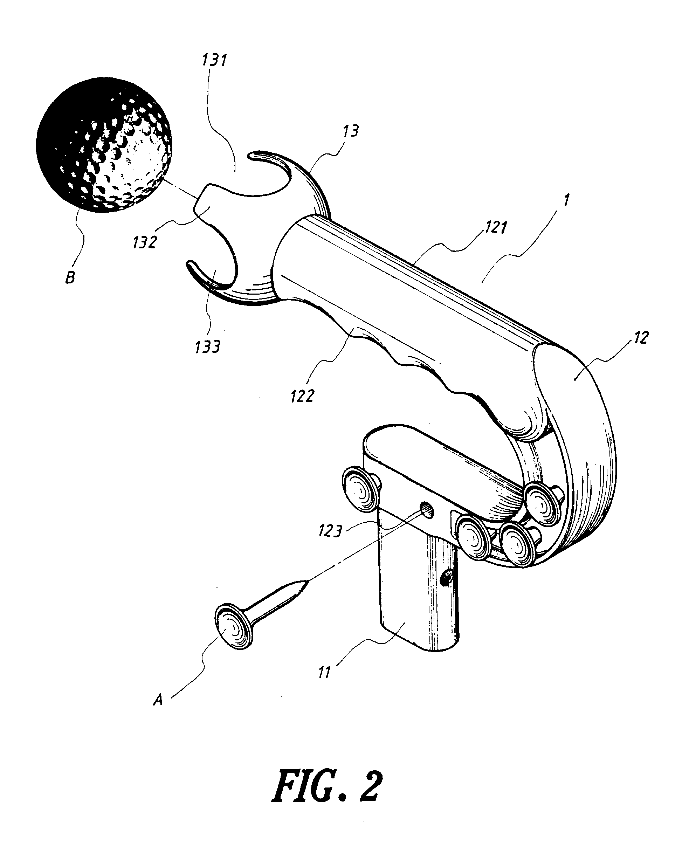

As shown in Fig. 2, tee grip 1 comprises a U-shaped body 12 which extends downwardly to form an insert portion 11 by which the grip 1 can be mounted on the grip supporting rod 2 or on an upper central supporting rod 9. The grip 1 has a horizontal handle portion 121 at its upper portion which handle portion 121 is formed with a corrugated portion 122 on its lower side to facilitate gripping. One end of the handle portion 121 extends outwardly to form a semi-spherical seat 13, a hollow chamber 131 being provided in the interior of the seat 13. The semi-spherical seat 13 has a plurality of recesses 133 which are designed to facilitate the picking of a golf ball B from the hollow chamber 131. A further function of the recesses 133 is to provide the semi-spherical seat 13 at its upper portion with elasticity and with a plurality of fingers 132. This function makes the semi-spherical seat 13 more flexible to be able to hold golf balls with different diameters (which difference is about 1.5mm). The U-shaped body 12 is formed at its side with a plurality of holes 123 each being arranged to receive a golf tee A.

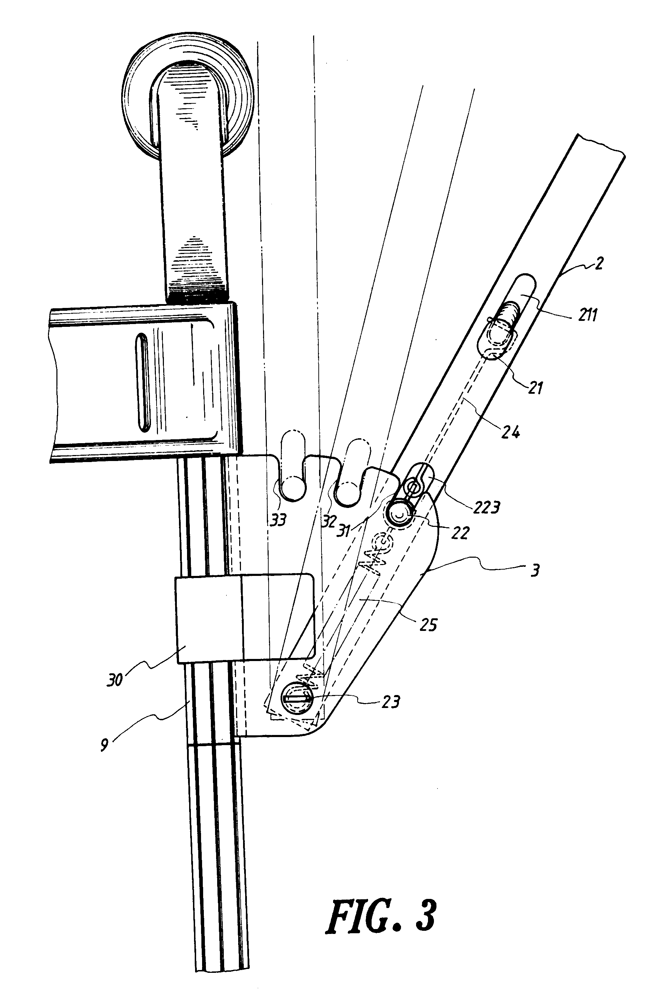

Referring to Fig. 3, the fixing seat 3 is provided at one end with a sleeve 30 by which the fixing seat 3 can be mounted on the upper central supporting rod 9. The other end of the fixing seat 3 extends outwardly to form a pair of sectoral portions symmetrical to each other. Each sectoral portion has a plurality of recesses 31, 32 and 33 each being open upwardly. The grip supporting rod 2 can detachably engage in one of the recesses 31, 32 or 33 by means of the movable element 21 to adjust the inclination of said grip supporting rod 2.

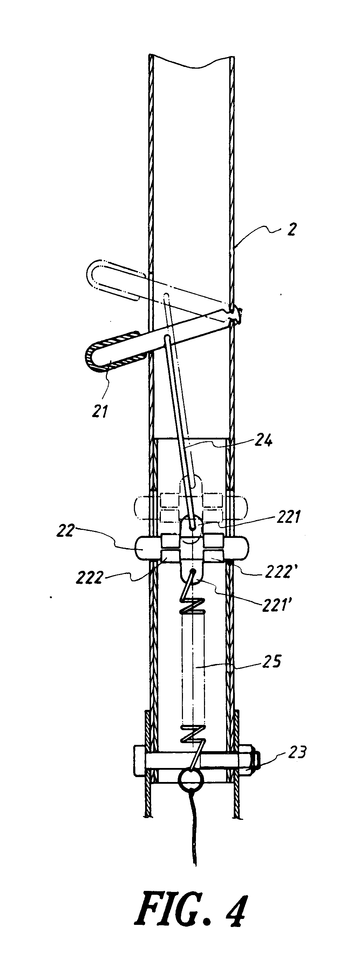

As shown in Fig. 4, the mechanism for adjusting the inclination of the grip supporting rod 2 comprises a movable element 21, a latch pin 22, a spring 25, a screw 23 and a link 24. The movable element 21 passes through the hollow grip supporting rod 2 with one end thereof projecting from said rod. The protruding end of the movable element 21 is designed to move along a longitudinal slot 211 (see Fig. 3) formed in the supporting rod 2. The latch pin 22 also passes through the hollow supporting rod 2 with both ends thereof projecting from the rod 2. The latch pin 22 cooperates with another longitudinal slot 223 to move therealong such that the latch pin 22, when moving downwardly, can engage with one of the recesses 31, 32 or 33 and when moving upwardly, can disengage from the recesses (as shown in Fig. 3). The central portion of the latch pin 22 is formed with a pair of opposite projections 221,221′. A pair of clamping sleeves 222, 222′ are located between each of the projections 221, 221′ and the inner wall of the handle supporting rod 2 to maintain the latch pin 22 in the correct position when sliding up and down. The movable element 21 is connected to the latch pin 22 by the link 24 while the latch pin 22 is connected to the screw 23 by the spring 25. Therefore, the latch pin 22 can be moved upwardly when the movable element 21 is actuated upwardly by an external force. As soon as the external force is removed, the latch pin 22 will return to its original position with the aid of the restoring force furnished by the spring 25. The longitudinal slots 211 and 223 of the grip supporting rod 2 are designed to limit the travel of the movable element 21 and the latch pin 22. This can help prevent the spring 25 from being over stretched.

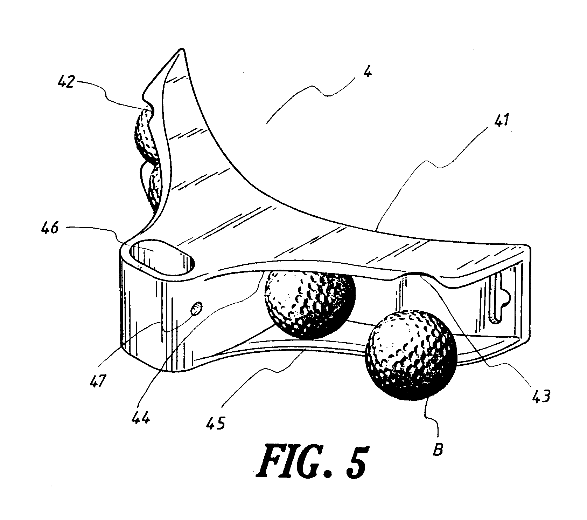

Referring to Fig. 5, the upper fixing member 4 is generally V-shaped. The front edge 41 of the upper fixing member 4 is arcuate to securely hold the top portion of a golf bag. Each wing of the upper fixing member 4 extends rearwardly so as to include a top plate and a bottom plate and form a chamber therebetween. A pair of arcuate edges 44 and 45 are provided on each wing so as to narrow the opening of the chamber. The upper arcuate edge 44 of each wing is further provided with an arcuate recess 42, 43 through which a golf ball B can be located in each said chamber. The intersection of said two wings has an aperture 46 by which the fixing member 4 can be mounted on the upper central supporting rod 9, as shown in Fig. 1. The side wall of the aperture 46 has a pin hole 47 for locating the fixing member 4.

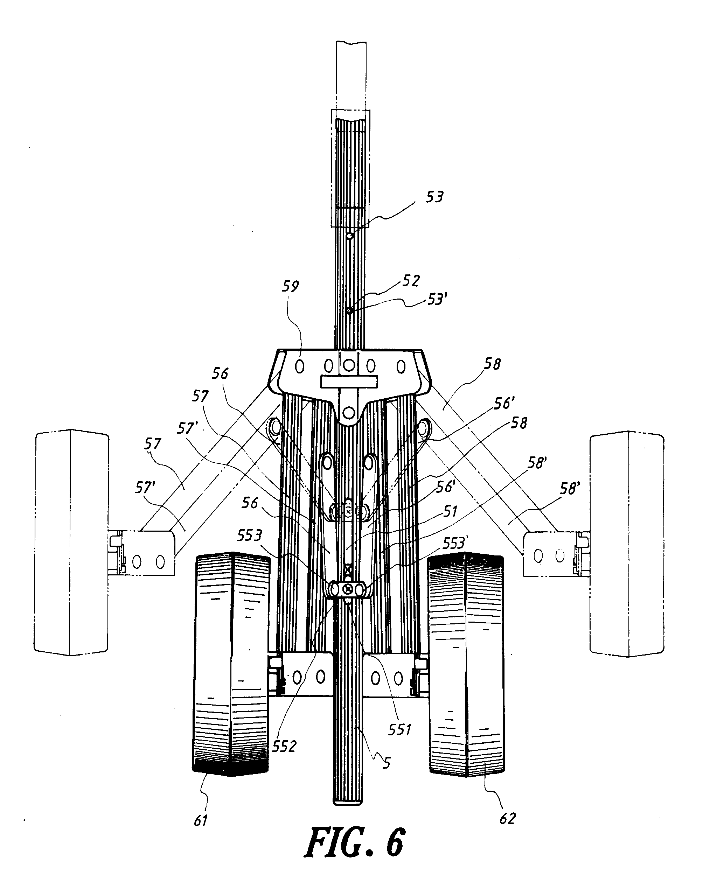

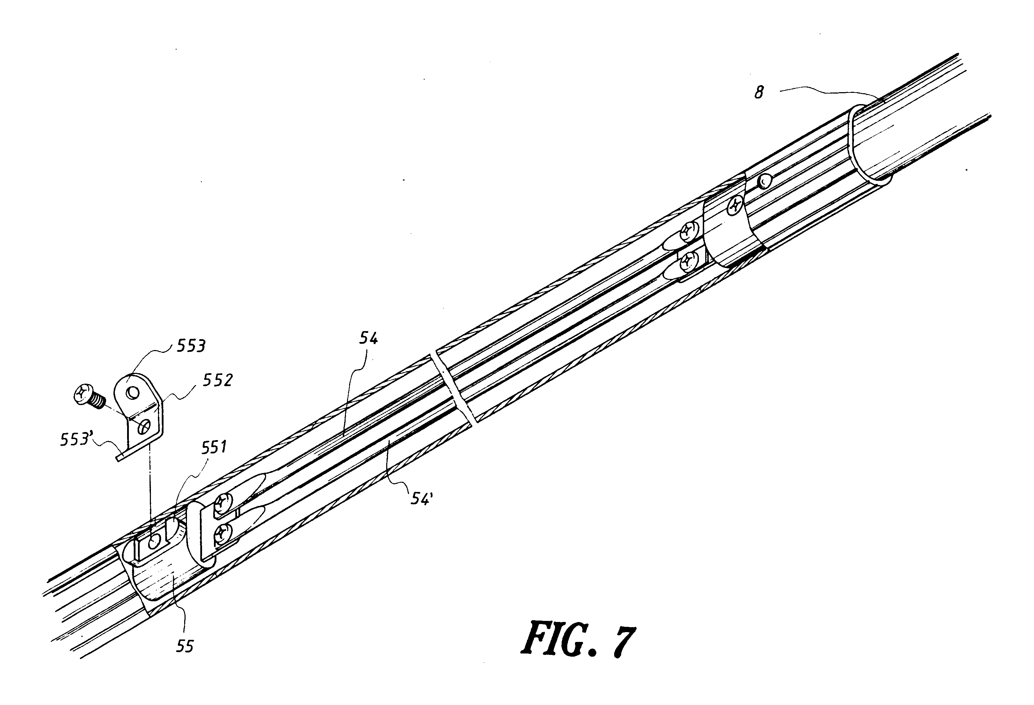

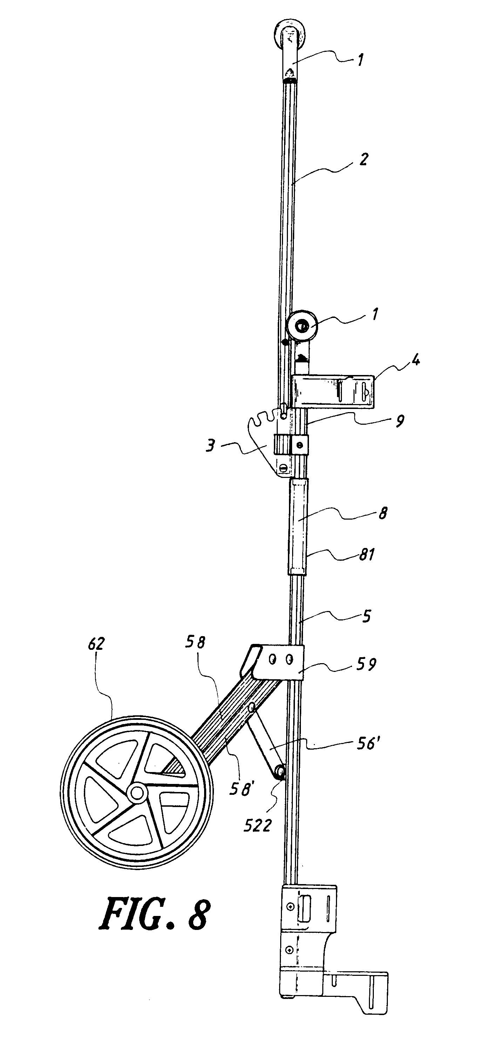

Referring to Figs. 6 to 8, the collapsible frame comprises a short tube 8, a lower central supporting rod 5, a set of connection pieces 56, 56′, a connection member or seat 59, and a set of wheel supporting rods 57, 57′, 58, 58′. The lower central supporting rod 5 has a sliding slot 51 at its middle point (Fig. 6). The upper end of the central supporting rod 5 is provided with a spring-loaded knob 52 which can protrude outwardly from either an upper positioning hole 53 or a lower positioning hole 53′ or be pressed into the rod 5 so as to be slidable along the inner wall of the rod. A pair of links 54, 54′ are disposed in the hollow central supporting rod 5 in such a manner that one end of each link is connected with the short tube 8 and the other end thereof is connected with a slidable element 55. The slidable element 55 has a positioning block 551 which can freely slide along the sliding slot 51. The positioning block 551 is joined utilizing a joining or connecting piece 552 having a pair of inclined extensions 553 and 553′ at its both sides. One end of each of the connection pieces 56 56′ is connected to each of said inclined extensions 553, 553′ of said joining piece 552. The other end of each said connection pieces 56, 56′ is connected with one of the wheel supporting rods 57, 57′,58 and 58′. The connection seat 59 is connected to both the lower central supporting rod 5 and to one end of each of said wheel supporting rods 57, 57', 58 and 58'.

The extension of the aforesaid collapsible frame comprises the following procedure:

Firstly, the spring-loaded knob 52 is pressed into the lower central supporting rod 5 to initiate the upward movement of the short tube 8. Then , the links 54,54' together with the slidable element 55, in turn are moved upwardly. At this time, the joining piece 552 together with the connection pieces 56, 56', can be moved upwardly. The wheel supporting rods 57, 57', 58 and 58' can be extended outwardly as the connection pieces 56 and 56' are moved upwardly. Once the spring-loaded knob 52 protrudes from and engages with the upper positioning hole 53, the travel of the short tube 8 is terminated so that the wheel supporting rods 57, 57', 58 and 58' can be fixed in a predetermined position. The short tube 8 is inserted into the upper central supporting rod 9. A sleeve 81 encases the intersections between the short tube 8 and each of the upper and lower supporting rods 5 and 9 in order to maintain the appearance.

In collapsing, the spring-loaded knob 52 is firstly pressed into the upper central supporting rod 5. The wheel supporting rods 57, 57', 58 and 58' can then return to the original collapsed position when the spring loaded knob 52 travels to the lower positioning hole 53' and protrudes outwardly therefrom.

In view of the above, it can clearly be seen that the major components of the collapsible mechanism are disposed in the interior of the central supporting rod 5. Therefore, this in built construction may increase the operating security and may improve the durability of components. The joining piece 552 of selected width is slid within the sliding slot 51 of the lower central supporting rod 5 during the extension or collapse of the collapsible frame, thereby avoiding the unstable and lossening operation of conventional golf carts.

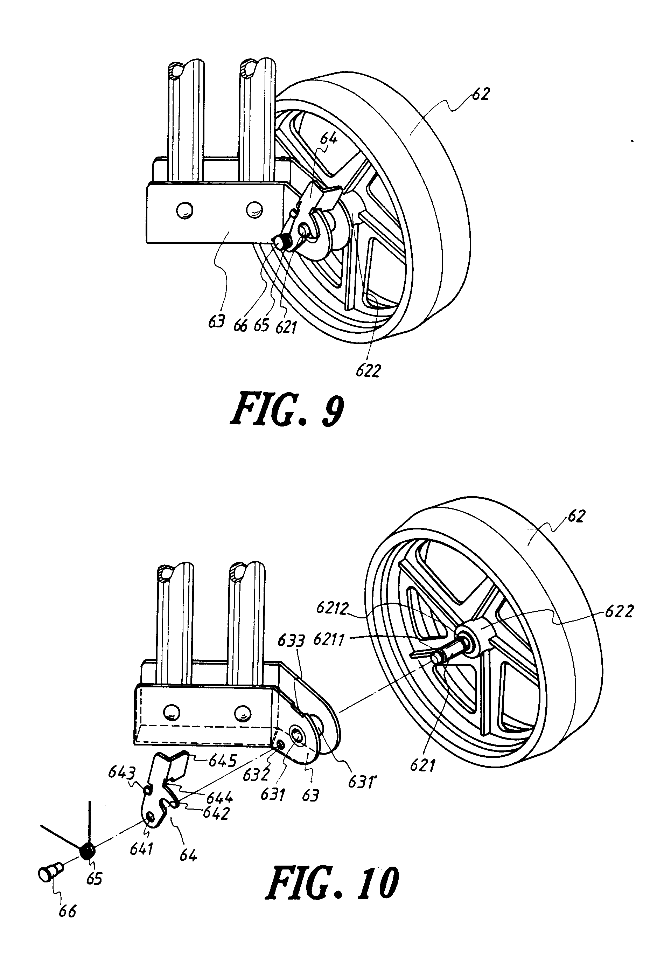

Referring to Figs. 9 to 12, the fastening mechanism for joining the wheels 61, 62 with the wheel supporting rods comprises a metal plate assembly 63, wheels 61, 62, a movable element 64, a spring 65 and a pin 66. The metal plate assembly 63 is U-shaped and has a pair of vertical plates. Each vertical plate is formed with an inclined extension having an axial hole 631 and a pivotal hole 632. The upper edge of the inner inclined extension has a shallow recess 633. The axle 621 of the wheel 62 is formed with a pair of slots 6211, 6212 and said axle 621 is arranged to pass through an axle sleeve 622 of the wheel 62. The movable element 64 is provided at one end with a flap 645. The lower portion of the flap 645 has a recess 644. The middle of the movable element 64 has a latch 642 and a projection 643 and the lower portion thereof has a pivotal hole 641. The pin 66 has a step-like shaft having two different diameters.

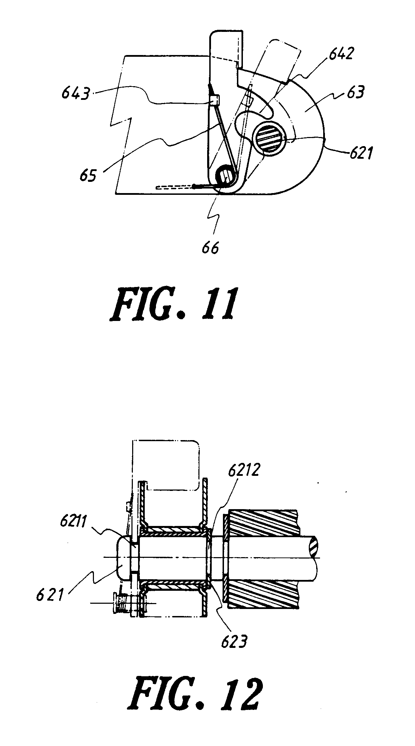

In assembly, as shown in Fig. 9, firstly, the axle 621 of the wheel 62 is inserted through the axial holes 631 and 631' of the metal plate assembly 63. Then,the pin 66 is inserted through the spring 65, the pivotal hole 641 of the movable element 64 and the pivotal hole 632 of the metal plate assembly 63 with one end of the spring 65 being leant on the projection 643 of the movable element 64. The latch member 642 of the movable element 64 is optionally engaged in a latch slot 6211 of the axle 621 to secure the wheel 62 to the metal plate assembly 63. The above mentioned recess 644 of the movable element receives the edge of the shallow recess 633. By means of engagement between the latch member 642 and the latch slot 6211, the wheel can be fastened with the metal plate assembly 63. As shown in Fig. 12, the axle 621 may have another latch slot 6212 to receive a ring member 623 such that the metal plate assembly 63 can further be fixed in its position.

As shown in Fig. 11, the latch member 642 can be disengaged from the latch slot 6211 of the axle 621 when the movable element 64 is forced in a leftward direction. Then, the wheel 62 can be separated from the metal plate assembly 63. When released, the movable element 64 will return to its original position by the restoring force provided by the spring 65. The length of the shallow recess 633 is designed to limit the travel of the movable element 64 in order to prevent the spring 65 from being over compressed. In view of the aforesaid construction, it can be seen that the wheel can be engaged with or disengaged from the metal plate assembly by the adjustment of the movable element 64. Thus, such an arrangement can simplify the construction and thus reduce the cost. In addition, the length of the axle of the wheel is within the scope of the width of the wheel. Therefore, this can minimize the volume when packaging for transportation.

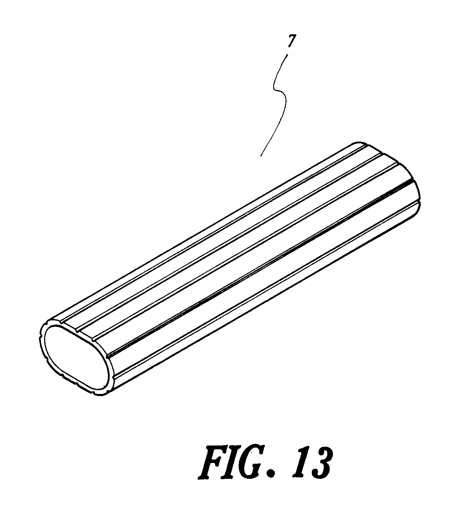

As shown in Fig. 13, an extruded aluminum tube 7 having an elliptical cross section can serve as the supporting rods of the golf cart of the present invention.

## Claims

1. A golf cart or trolley comprising a grip, a grip supporting rod (2), a fixing seat (3) for mounting the grip supporting rod on a central supporting rod (9), a fixing member for holding a golf bag, a collapsible frame, a pair of wheels, wheel supporting rods and a structure for joining the wheels and wheel supporting rods together, characterised in that:

said fixing seat (3) is provided at one end with a sleeve (30) by which the fixing seat (3) can be mounted on said central supporting rod (9), the other end of said fixing seat (3) being formed as a pair of symmetrical extensions, each extension being formed at its upper edge with a plurality of recesses (31,32,33), each recess being open upwardly, and in that

said grip supporting rod (2) has a latch pin (22) radially passing therethrough, both ends of said latch pin projecting from said grip supporting rod (2), said grip supporting rod (2) being formed with a pair of longitudinal slots (223) each corresponding to one of said two ends of said latch pin (22) so that said latch pin (22) can move along said two slots (223), said grip supporting rod (2) further being provided with a movable element (21), said movable element (21) being connected to said latch pin (22) by a link (24) such that the latch pin (22) can be moved along said two slots (223) by operating the movable element (21), said latch pin (22) being connected to a spring (25) which forces the latch pin (22) downwardly towards said fixing seat (3);

whereby said grip supporting rod (2) can engage with one of said recesses (31, 32, 33) by adjusting said movable element (21) to facilitate the adjustment of the inclination of said grip supporting rod (2).

2.  A golf cart or trolley as claimed in claim 1, characterised in that said extensions of said fixing seat (3) are sector-shaped.

3.  A golf cart or trolley as claimed in claim 1 or 2, characterised in that said slots (211, 223) extend axially along said grip supporting rod (2).

4.  A golf cart or trolley as claimed in any preceding claim, characterised in that said fixing member (4) for holding a golf bag on said golf cart or trolley has a V-shaped body, the intersection of both wings of said V-shaped body being formed with an aperture (46) which has at its side wall a pin hole (47), the front edge (41) of the open end of said V-shaped body being arcuate, each wing of said V-shaped body having rear side extensions of upper and lower plates between which a chamber is formed, wherein the upper and lower plates having arcuate edges (44, 45) symmetrical to each other, the upper edge (44) of each said wing further being provided with an arcuate recess (42, 43) through which a golf ball can be located in said chamber.

5.  A golf cart or trolley as claimed in any preceding claim, characterised in that said grip (1) for said golf cart or trolley has a U-shaped body (12) which extends downwardly to form an insert portion (11) by which said grip (1) can be mounted on the grip supporting rod (2), said grip body (12) having at its upper portion a horizontal handle portion (121) which is formed at its lower side with a corrugated portion (122), one end of said handle portion (121) extending outwardly to form a semi-spherical seat (13) in which a chamber (131) is formed said semi-spherical seat (13) having a plurality of recesses (133), said semi-spherical seat (13) being formed at its upper end with a plurality of fingers (132) so as to elastically hold a golf ball within said semi-spherical seat (13).

6.  A golf cart or trolley as claimed in claim 5, characterised in that said grip body (12) is formed at its side wall with a plurality of holes (123) each being arranged to receive a golf tee.

7.  A golf cart or trolley as claimed in any preceding claim, characterised in that said collapsible frame for said golf cart or trolley comprises a short tube (8), a lower central supporting rod (5), a set of connection pieces (56, 56') and a connection member or seat (59), said lower central supporting rod (5) having a sliding slot (51), a set of links (54, 54') being disposed in said lower central supporting rod (5) in such a manner that one end of each link (54, 54') is connected with said short tube (8) and the other end thereof is connected with a slidable element (55), said slidable element (55) having a positioning block (551) which is arranged to freely and stably slide along said sliding slot (51) of said lower central supporting rod (5), said positioning block (551) being joined with a joining piece (552) which has a pair of extensions (553, 553'), one end of each of said connection pieces (56, 56') being connected to each of said extensions (553, 553') of said joining piece (552) and the other end of each of said connection pieces (56, 56') being connected to a wheel supporting rod (57, 57', 58, 58'), said connection seat (59') being connected to both the lower central supporting rod (5) and said wheel supporting rods (57, 57', 58, 58'), whereby said wheel supporting rods (57, 57', 58, 58') can be extended when said short tube (8) is forced upwardly and said wheel supporting rods (57, 57', 58, 58') can be collapsed to align with said lower central supporting rod (5) when said short tube (8) is forced downwardly.

8. A golf cart or trolley as claimed in claim 7, characterised in that the upper end of said lower central supporting rod (5) is furnished with a spring-loaded knob (52) disposed within the lower central supporting rod (5), said lower central supporting rod (5) is formed at its upper portion with upper and lower positioning holes, said spring-loaded knob (52) is able to project from and engage with said positioning holes (53, 53'), when said short tube (8) is forced to its upper limit said spring-loaded knob (52) engaging with said upper positioning hole (53), and when said short tube (8) is forced to its lower limit said spring-loaded knob (52) engaging with said lower positioning hole (53').

9. A golf cart or trolley as claimed in any preceding claim, characterised in that said combined structure of wheels and supporting members for said golf cart or trolley comprises:

a metal plate assembly (63), said pair of wheels (61, 62), a movable element (64) and a spring (65), said metal plate assembly (63) being U-shaped and having a pair of vertical plates, each vertical plate being formed with an inclined extension having an axial hole (631), an axle (621) being secured to a wheel (62), said axle (621) having a latch slot (6211), the horizontal bottom plate of said metal plate assembly (63) being vertically joined with the wheel supporting rods (57, 57', 58, 58') and said vertical extension of said metal plate assembly (63) being joined with said axle (621) of said wheel (62), a latch member (642) of said movable element (64) being forced to engage with said latch slot (6211) of said axle (621) by said spring (65) so as to secure said wheel (62) to said metal plate assembly (63), said movable element (64) being able to overcome the extension force provided by said spring (65) such that said latch member (642) can disengage from said latch slot (6211) to separate said wheel (62) from said metal plate assembly (63).

**Revendications**

1. Chariot de golf ou trolley comportant une poignée, une barre porte-poignée (2), un siège de fixation (3) pour le montage de la barre porte-poignée sur une barre porteuse centrale (9), un élément de fixation pour maintenir un sac de golf, un châssis pliant, une paire de roues, des tiges d'appui de roues et une structure destinée à relier les roues aux tiges d'appui de roues, caractérisé en ce que :

ledit siège de fixation (3) est muni à une extrémité d'un manchon (30) par lequel le siège de fixation (3) peut être monté sur ladite barre porteuse centrale (9), l'autre extrémité dudit siège de fixation (3) étant constituée sous forme d'une paire de parties élargies symétriques, chaque partie élargie étant constituée sur son bord supérieur avec une série de logements (31, 32, 33), chaque logement étant ouvert vers le haut, et en ce que

ladite barre porte-poignée (2) comporte une broche de verrouillage (22) qui la traverse radialement, les deux extrémités de ladite broche de verrouillage étant en saillie sur ladite barre porte-poignée (2), ladite barre porte-poignée (2) étant constituée avec deux fentes longitudinales (223) dont chacune correspond à l'une desdites deux extrémités de ladite broche de verrouillage (22) de sorte que ladite broche de verrouillage (22) peut se déplacer le long desdites deux fentes, ladite barre porte-poignée (2) étant en outre munie d'un élément mobile (21), ledit élément mobile (21) étant relié à ladite broche de verrouillage (22) part une agrafe (24), de manière que la broche de verrouillage (22) puisse être déplacée le long des deux dites fentes (223) en actionnant l'élément mobile (21), ladite broche de verrouillage (22) étant reliée à un ressort (25) qui exerce une force descendante sur la broche de verrouillage (22) en direction dudit siège de fixation (3),

ce qui fait que ladite barre porte-poignée (2) peut engrener avec l'un desdits logements (31, 32, 33) par réglage dudit élément mobile (21) pour faciliter le réglage de l'inclinaison de ladite barre porte-poignée (2).

2. Chariot de golf ou trolley selon la revendication 1, caractérisé en ce que lesdites parties élargies dudit siège de fixation (3) sont en forme de secteur.

3. Chariot de golf ou trolley selon la revendication 1 ou 2, caractérisé en ce que lesdites fentes (211, 223) s'étendent en direction axiale le long de ladite barre porte-poignée (2).

4. Chariot de golf ou trolley selon l'une quelconque des revendications précédentes, caractérisé en ce que ledit élément de fixation (4) pour maintenir un sac de golf sur ledit chariot de golf ou trolley a un corps en forme de V, l'intersection des deux ailes dudit corps en forme de V étant réalisée avec une ouverture (46) présentant un trou de goupille (47) dans sa paroi latérale, le bord avant (41) de l'extrémité ouverte dudit corps en forme de V étant arquée, chaque aile dudit corps en forme de V présentant des prolongements vers l'arrière d'une plaque supérieure et d'une plaque inférieure, une chambre étant formée entre ces prolongements, la plaque supérieure et la plaque inférieure présentant des bords arqués (44, 45) symétriques l'un de l'autre, le bord supérieur (44) de chacune desdites ailes étant en outre muni d'un logement incurvé (42, 43) à travers lequel une balle de golf peut être mise en place dans ladite chambre.

5. Chariot de golf ou trolley selon l'une quelconque des revendications précédentes, caractérisé en ce que ladite poignée (1) destinée audit chariot de golf ou trolley a un corps (12) en forme de U qui s'étend vers le bas pour former une partie d'introduction (11) par laquelle ladite poignée (1) peut être montée sur la barre porte-poignée (2), ledit corps de poignée (12) comportant à sa partie supérieure une partie de prise horizontale (121) qui est constituée du côté inférieur avec une zone ondulée (122), une extrémité de ladite partie de prise (121) s'étendant vers l'extérieur pour constituer un siège hémisphérique (13) dans lequel est formée une chambre (131), ledit siège hémisphérique (13) présentant plusieurs évidements (133), ledit siège hémisphérique (13) étant constitué à son extrémité supérieure avec plusieurs doigts (132) de manière à maintenir élastiquement une balle de golf à l'intérieur dudit siège hémisphérique (13).

6. Chariot de golf ou trolley selon la revendication 5, caractérisé en ce que ledit corps de poignée (12) comporte une paroi latérale constituée avec une série de trous (123), chaque trou étant agencé pour recevoir un tee de golf.

7. Chariot de golf ou trolley selon l'une quelconque des revendications précédentes, caractérisé en ce que ledit châssis pliant pour ledit chariot de golf ou trolley comporte un tube courts (8), une barre porteuse centrale inférieure (5), un jeu d'éléments de liaison (56, 56') et un élément d'assemblage ou siège (59), ladite barre porteuse centrale inférieure (5) présentant une fente de coulissement (51), un jeu de tiges de liaison (54, 54') étant disposé dans ladite barre porteuse centrale inférieure (5) de manière qu'une extrémité de chaque tige (54, 54') soit reliée audit tube court (8) et que l'autre extrémité soit reliée à un élément coulissant (55), ledit élément coulissant (55) comportant un bloc de positionnement (551) agencé pour coulisser librement et de façon stable le long de ladite fente de coulissement (51) de ladite barre porteuse centrale inférieure (5), ledit bloc de positionnement (551) étant assemblé avec une pièce de jonction (552) qui présente deux prolongements (553, 553'), une extrémité de chacun desdits éléments de liaison (56, 56') étant reliée à chacun desdits prolongements (553, 553') de ladite pièce de jonction (552) et l'autre extrémité de chacun desdits éléments de liaison (56, 56') étant relié à une tige d'appui de roue (57, 57', 58, 58'), ledit siège d'assemblage (59') étant relié à la barre porteuse centrale inférieure (5) ainsi qu'auxdites tiges d'appui de roues (57, 57', 58, 58') ce qui fait que lesdites tiges d'appui de roues (57, 57', 58, 58') peuvent être dépliées quand ledit tube court (8) est actionné vers le haut et que lesdites tiges d'appui de roues (57, 57', 58, 58') peuvent être repliées à l'alignement de ladite barre porteuse centrale inférieure (5) quand ledit tube court (8) est actionné vers le bas).

8. Chariot de golf ou trolley selon la revendication 7, caractérisé en ce que l'extrémité supérieure de ladite barre porteuse centrale inférieure (5) est munie d'un bouton (52) chargé par ressort et disposé à l'intérieur de la barre porteuse centrale inférieure (5), ladite barre porteuse centrale inférieure (5) présentant des trous de positionnement supérieur et inférieur dans sa partie supérieure, ledit bouton (52) chargé par ressort étant constitué pour pouvoir sortir et s'engager dans lesdits trous de positionnement (53, 53'), ledit bouton (52) chargé par ressort s'engageant dans ledit trou de positionnement supérieur (53) quand ledit tube court (8) est déplacé dans sa position limite supérieure et ledit bouton (52) chargé par ressort s'engageant dans ledit trou de positionnement inférieur (53') quand ledit tube court (8) est déplacé dans sa position limite inférieure.

9. Chariot de golf ou trolley selon l'une quelconque des revendications précédentes, caractérisé en ce que ladite structure combinée de roues et d'éléments d'appui pour ledit chariot de golf ou trolley comporte :
    un ensemble de plaques métalliques (63), ladite paire de roues (61, 62), un élément mobile (64) et un ressort (65), ledit ensemble de plaques métalliques (63) étant en forme de U et comportant deux laques verticales, chaque plaque verticale étant constituée avec un prolongement incliné présentant un trou axial (631), un axe (621) étant fixé sur une roue (62), ledit axe (621) présentant une fente de verrouillage (6211), la plaque de base horizontale dudit ensemble de plaques métalliques (63) étant assemblée en direction verticale avec les tiges d'appui de roues (57, 57', 58, 58') et ledit prolongement vertical dudit ensemble de plaques métalliques (63) étant assemblé avec ledit axe (621) de ladite roue (62), un élément de verrouillage (642) dudit élément mobile (64) étant actionné par force pour engrener avec ladite fente de verrouillage (6211) dudit axe (621) par ledit ressort (65), de manière à assujettir ladite roue (62) audit ensemble de plaques métalliques (63), ledit élément mobile (64) étant capable de vaincre la force d'extension développée par ledit ressort (65), de sorte que ledit élément de verrouillage (642) peut se dégager de ladite fente de verrouillage (6211) pour qu'on puisse séparer ladite roue (62) dudit ensemble de plaques métalliques (63).

**Patentansprüche**

1. Golfwagen oder Transportkarren mit einem Griff, der getragen ist von einer Griffstange (2), mit einem Haltelager (3) zur Befestigung der Griffstange auf einer zentralen Tragstange (9), mit einem Halteteil (4) zur Aufnahme eines Golfsacks, mit einem Klapprahmen (10), einem Paar Rädern, Stützstangen für die Räder und mit einem Mechanismus zum Aneinanderklappen der Räder und ihrer Stützstangen, dadurch gekennzeichnet, daß das Haltelager (3) an seinem einen Ende mit einer Hülse versehen ist, mittels der das Haltelager auf der zentralen Tragstange (9) befestigbar ist, wobei das andere Ende dieses Haltelagers als ein Paar von symmetrischen Ansätzen ausgebildet ist, deren jeder an seiner Oberkante eine Mehrzahl von Einschnitten (31,32,33) aufweist, die nach oben hin offen sind, und daß die Griffstange (2) mit einem Sperrzapfen (22) versehen ist, der die Griffstange (2) radial durchsetzt und dessen beide Enden aus der Griffstange (2) beidseitig herausstehen, daß die Griffstange (2) mit einem Paar von Längsschlitzen (223) versehen ist, entsprechend jeweils einem der beiden Enden des Sperrzapfens (22), so daß dieser Sperrzapfen sich entlang dieser beiden Schlitze (223) bewegen kann, daß die Griffstange weiterhin ein bewegliches Teil (21) aufweist, das mit dem Sperrzapfen (22) über ein Verbindungsglied (24) derart verbunden ist, daß der Sperrzapfen (22) bei Betätigung des beweglichen Teils (21) entlang der beiden Schlitze (223) verschoben werden kann, daß der Sperrzapfen (22) mit einer Feder (25) verbunden ist, die den Sperrzapfen (22) nach unten in Richtung auf das Haltelager (3) zieht, wobei die Griffstange mit einem der Einschnitte (31,32,33) in Eingriff gebracht werden kann durch Betätigung des beweglichen Teils (21), um dadurch eine leichte Anpassung der Neigung der Griffstange (2) einzustellen.

2. Golfwagen oder Transportkarren nach Anspruch 1, dadurch gekennzeichnet, daß die Ansätze des Haltelagers (3) kreissektor-förmig ausgebildet sind.

3. Golfwagen oder Transportkarren nach Anspruch 1 oder 2, dadurch gekennzeichnet, daß die Schlitze (211,223) sich axial entlang der Griffstange (2) erstrecken.

4. Golfwagen oder Transportkarren nach einem der vorhergehenden Ansprüche, dadurch gekennzeichnet, daß das Halteteil (4) zur Aufnahme eines Golfsacks auf dem Golfwagen oder dem Transportkarren V-ähnliche Gestalt besitzt, wobei im Schnittbereich der beiden Schenkel dieses V-förmigen Körpers eine Öffnung (46) ausgebildet ist, die an einer ihrer Seitenwandungen mit einem Schraubloch (47) versehen ist, daß die Vorderkante (41) des geöffneten V-förmigen Körpers kreisbogenartig geformt ist, wobei jeder Flügel dieser V-Form rückseitige Ansätze bestehend aus oberen und unteren Platten aufweist, die zwischen sich eine Kammer einschließen, wobei die oberen und die unteren Platten mit bogenförmigen Kanten (44,45) versehen sind, die symmetrisch zueinander verlaufen, und wobei die Oberkante (44) jedes Flügels weiterhin mit einer bogenförmigen Ausnehmung (42,43) versehen ist, durch die ein Golfball in die Kammer eingeführt werden kann.

5. Golfwagen oder Transportkarren nach einem der vorhergehenden Ansprüche, dadurch gekennzeichnet, daß der Griff (1) für den Golfwagen oder den Transportkarren aus einem U-förmigen Körper (12) gebildet ist, der sich nach unten hin fortsetzt, um einen Einsteckabschnitt (11) zu bilden, mittels dem der Griff (1) auf die Griffstange (2) aufsetzbar ist, daß dieser Griffkörper (12) an seinem oberen Teil einen horizontal verlaufenden Griffabschnitt (121) aufweist, der an seiner Unterseite mit einem gewellten Abschnitt (122) versehen ist, daß dieser Griffabschnitt (121) an seinem äußeren Ende einen halbkugelförmigen Sitz (13) ausbildet, in dem ein Aufnahmeraum (131) geformt ist, wobei dieser halbkugelförmige Sitz (13) eine Vielzahl von Einschnitten (133) aufweist, so daß der halbkugelförmige Sitz (13) an seiner Oberseite mit einer Mehrzahl von fingerartigen Abschnitten (132) ausgebildet ist, so daß er einen Golfball innerhalb dieses halbkugelförmigen Sitzes (13) elastisch halten kann.

6. Golfwagen oder Transportkarren nach Anspruch 5, dadurch gekennzeichnet, daß der Griffkörper (12) an einer Seite mit einer Vielzahl von Löchern (123) versehen ist, die jeweils zur Aufnahme einer Abschlagstütze (Golf-T) dienen.

7. Golfwagen oder Transportkarren nach einem der vorhergehenden Ansprüche, dadurch gekennzeichnet, daß der Klapprahmen für den Golfwagen oder den Transportkarren ein kurzes Röhrenstück (8) beinhaltet, eine untere zentrale Tragstange (5), ein Set von Verbindungsstücken (56,56') und ein Verbindungsglied oder Sitzteil (59), wobei die untere zentrale Tragstange (5) einen Verschiebeschlitz (51) aufweist, einen Set von Verbindungsstangen (54,54'), die in der unteren zentralen Tragstange (5) derart angeordnet sind, daß das eine Ende jeder dieser Verbindungsstangen (54,54') mit dem kurzen Röhrenstück (8) verbunden ist und das andere Ende mit einem verschiebbaren Element (55), das mit einem Positionierblock (551) versehen ist, der frei und stabil in diesem Verschiebeschlitz (51) der unteren zentralen Tragstange (5) gleiten kann, und der mit einem Verbindungsstück (552) ausgerüstet ist, das seinerseits ein Paar von seitlichen Flügelabschnitten (553,553') aufweist, wobei das eine Ende der Verbindungsteile (56,56') mit jedem dieser Abschnitte (553,553') des Verbindungsstückes (552) verbunden ist, und das andere Ende jedes dieser Verbindungsstücke (56,56') mit einer Räder-Stützstange (57,57',58,58'), wobei das Verbindungsstück (59') sowohl mit der unteren zentralen Tragstange (5) als auch mit diesen Räder-Stützstangen (57,57',58,58') verbunden ist, wodurch die Stützstangen (57,57',58,58') ausgeklappt werden können, wenn das kurze Röhrenstück (8) nach oben geschoben wird, und die Räder-Stützstangen (57,57',58,58') gegeneinander gezogen werden können und an der unteren zentralen Tragstange (5) anliegen, wenn dieses kurze Röhrenstück (8) nach unten verschoben wird.

8. Golfwagen oder Transportkarren nach Anspruch 7, dadurch gekennzeichnet, daß das obere Ende der zentralen Tragstange (5) mit einem federbeaufschlagten Knopf (52) versehen ist, der innerhalb der unteren zentralen Tragstange (5) angeordnet ist, daß die untere zentrale Tragstange (5) in ihrem oberen Abschnitt mit einem oberen und unteren Positionierloch versehen ist, und daß der federbeaufschlagte Knopf (52) sich in diese Positionierlöcher (53,53') erstrecken kann, derart, daß, wenn der kurze röhrenförmige Abschnitt (8) nach oben gezogen ist, der federbeaufschlagte Knopf (52) in das obere Positionierloch (53) eingreift, und, wenn der kurze röhrenförmige Abschnitt (8) in seine untere Endposition verschoben wird, der federbeaufschlagte Knopf (52) in das untere Positionierloch (53') eingreift.

9. Golfwagen oder Transportkarren nach einem der vorhergehenden Ansprüche, dadurch gekennzeichnet, daß die gemeinsame Struktur von Rädern und Stützgliedern für den Golfwagen oder Transportkarren beinhaltet: Eine Anordnung (63) aus Metallplatten, das Räderpaar (61,62), ein bewegliches Element (64) und eine Feder (65), wobei die Metallplatten-Anordnung (63) einen U-förmigen Querschnitt mit sich vertikal erstreckenden seitlichen Platten aufweist, von denen jede einen seitlich abgewinkelten Abschnitt mit einer Achsialbohrung (631) aufweist, mit einem Achsstück (621), das an einem Rad (62) befestigt ist, und eine Ringnut (6211) aufweist, wobei die horizontale Grundplatte der Metallplatten-Anordnung (63) mit den vertikal angeordneten Räder-Stützstangen (57,57',58,58') verbunden ist und der genannte seitlich abgewinkelte Abschnitt der Metallplatten-Anordnung (63) mit dem Achsstück (621) des Rades (62) verbunden ist, mit einem Sperrteil (642) an dem beweglichen Element (64) im Eingriff mit der genannten Ringnut (6211) des Achsstücks (621) mit Hilfe der Feder (65), um dadurch das Rad (62) an der Metallplatten-Anordnung (63) zu halten und zu sichern, wobei das bewegliche Element (64) in der Lage ist, die Spannkraft der Feder (65) zu überwinden, derart, daß das Sperrglied (642) aus dem Eingriff mit der Ringnut (6211) gelöst werden kann, um das Rad (62) von der Metallplatten-Anordnung (63) zu trennen.

FIG. 1

**FIG. 2**

*FIG. 3*

FIG. 4

**FIG. 5**

**FIG. 6**

FIG. 7

**FIG. 8**

FIG. 9

FIG. 10

19

**FIG. 11**

**FIG. 12**

7

# FIG. 13